# EUROPEAN PATENT APPLICATION

(11) **EP 3 276 954 A1**
(43) Date of publication of application: **31.01.2018**
(21) Application number: 16785927.1
(22) Date of filing: 27.04.2016
(51) Int. Cl.: H04N 7/15

(54) **MULTI-IMAGE ADJUSTING METHOD AND DEVICE, AND MULTIPOINT CONTROLLER UNIT**

(30) Priority: 30.04.2015 CN 201510216792
(71) Applicant: ZTE Corporation, Shenzhen, Guangdong 518057 (CN)
(72) Inventor: MIAO, Jun, Shenzhen Guangdong 518057 (CN); SUN, Bo, Shenzhen Guangdong 518057 (CN); LI, Jun, Shenzhen Guangdong 518057 (CN); DING, Yuanxin, Shenzhen Guangdong 518057 (CN)
(74) Representative: Awapatent AB
(86) International application number: PCT/CN2016/080390
(87) International publication number: WO 2016/173496

(57) **Abstract**

A multi-image adjusting method and device and a Multipoint Controller Unit (MCU) are provided. The method includes that: the MCU receives code streams sent by multiple terminals, and synthesizes a multi-image after decoding videos; the MCU receives an adjustment request for a sub-image in the multi-image, and adjusts a display parameter of a corresponding sub-image according to the adjustment request; and the MCU codes and sends the adjusted multi-image to a corresponding terminal.

## Description

### Technical Field

The present invention relates to, but not limited to, the field of multimedia video communications, and in particular to a multi-image adjusting method and device and a Multipoint Controller Unit (MCU).

### Background

A video conference system capable of achieving a multi-image effect includes at least two terminals, an MCU and a corresponding transmission network. The MCU plays a key role in the multi-image video conference system. It may be independent equipment and may also be an equipment logic entity embedded in a video conference terminal. It is responsible for receiving and decoding compressed video code streams sent by multiple terminals, performing scaling processing according to a requirement of a conference, then filling corresponding positions on a multi-image with scaled videos according to a pre-specified multi-image layout, and finally coding and sending the filled videos to the terminals, and the terminals may decode received video code streams to watch the spliced multi-image.

In a multi-image video conference, a sub-image layout in a multi-image and sizes of sub-images under the layout are fixed, or limited layout adjustment may be performed under the condition of a specified image number, and the sizes of the sub-images under this layout are also fixed.

### Summary

The below is the summary of a subject described in detail in the present document, and the summary is not intended to limit the scope of protection of the claims.

Embodiments of the present invention provide a multi-image adjusting method and device and an MCU, which may solve the problem of how to enable a video conference user to implement adjustment of sub-images in a multi-image conference according to the user's own requirement to meet a personalized requirement under the condition of not changing existing MCU and terminal hardware and networking condition.

The embodiments of the present invention use the following schemes.

A multi-image adjusting method includes that:
an MCU receives code streams sent by multiple terminals, and synthesizes a multi-image after performing decoding to obtain video data;
the MCU receives an adjustment request for a sub-image in the multi-image, and adjusts a display parameter of a corresponding sub-image according to the adjustment request; and
the MCU codes and sends the adjusted multi-image to a corresponding terminal.

In an exemplary embodiment, that the MCU receives the adjustment request for the sub-image in the multi-image includes that:
the MCU receives the adjustment request for the sub-image in the multi-image from a local monitor console of the MCU or a terminal.

In an exemplary embodiment, the adjustment request includes: requesting for adjusting a specified sub-image into a set size; and that the display parameter of the corresponding sub-image is adjusted according to the adjustment request includes that:
a display size of the specified sub-image is adjusted into the set size according to the adjustment request.

In an exemplary embodiment, the adjustment request includes: requesting for moving the specified sub-image to a set position; and that the display parameter of the corresponding sub-image is adjusted according to the adjustment request includes that:
a display position of the specified sub-image is adjusted into the set position according to the adjustment request.

In an exemplary embodiment, after the display position of the specified sub-image is adjusted into the set position according to the adjustment request, the method further includes that:
when part of a region of the specified sub-image is located outside a display region of the multi-image, the specified sub-image is cropped or scaled down according to a size of a region, occupied by the specified sub-image, in the display region of the multi-image.

In an exemplary embodiment, after the display parameter of the corresponding sub-image is adjusted according to the adjustment request, the method further includes that:
when a no-content region appears in the display region of the multi-image after adjustment, display sizes of other sub-images are correspondingly enlarged or the no-content region is filled with a predetermined pattern; and
when a sub-image overlapping region appears in the display region of the multi-image after adjustment, the display sizes of the other sub-images are correspondingly reduced or a content in the overlapping region is displayed with a predetermined manner.

A multi-image adjustment device is arranged in an MCU, and includes:
a processing module, configured to receive code streams sent by multiple terminals, and synthesize a multi-image after performing decoding to obtain video data;
an adjusting module, configured to receive an adjustment request for a sub-image in the multi-image, and adjust a display parameter of a corresponding sub-image according to the adjustment request; and
a sending module, configured to code and send the adjusted multi-image to a corresponding terminal.

In an exemplary embodiment, that the adjusting module receives the adjustment request for the sub-image in the multi-image includes that:
the adjusting module receives the adjustment request for the sub-image in the multi-image from a local monitor console of the MCU or a terminal.

In an exemplary embodiment, the adjustment request includes: requesting for adjusting a specified sub-image into a set size; and that the adjusting module adjusts the display parameter of the corresponding sub-image according to the adjustment request includes that:
the adjusting module adjusts a display size of the specified sub-image into the set size according to the adjustment request.

In an exemplary embodiment, the adjustment request includes: requesting for moving the specified sub-image to a set position; and that the adjusting module adjusts the display parameter of the corresponding sub-image according to the adjustment request includes that:
the adjusting module adjusts a display position of the specified sub-image into the set position according to the adjustment request.

In an exemplary embodiment, the adjusting module is further configured to, after adjusting the display position of the specified sub-image into the set position according to the adjustment request, if part of a region of the specified sub-image is located outside a display region of the multi-image, crop or scale down the specified sub-image according to a size of a region, occupied by the specified sub-image, in the display region of the multi-image.

In an exemplary embodiment, the adjusting module is further configured to, after adjusting the display parameter of the corresponding sub-image according to the adjustment request, if a no-content region appears in the display region of the multi-image after adjustment, correspondingly enlarge display sizes of other sub-images or fill the no-content region with a predetermined pattern; and if a sub-image overlapping region appears in the display region of the multi-image after adjustment, correspondingly reduce the display sizes of the other sub-images or display a content in the overlapping region with a predetermined manner.

An MCU includes:
a network interface, configured to receive code streams sent by multiple terminals;
a decoder, configured to decode the code streams to obtain video data;
a synthesis module, configured to synthesize the video data into a multi-image; and
a coder, configured to code the synthesized multi-image to send through the network interface.

Herein the network interface is further configured to receive an adjustment request for a sub-image in the multi-image; the synthesis module is further configured to adjust a display parameter of a corresponding sub-image according to the adjustment request; and the coder is further configured to code the adjusted multi-image to send to a corresponding terminal through the network interface.

In an exemplary embodiment, the MCU further includes: a local monitor console of the MCU.

Herein the local monitor console of the MCU includes: a display screen, configured to display the multi-image, and a mouse, configured to input the adjustment request; and that the network interface receives the adjustment request for the sub-image in the multi-image includes that: the network interface receives the adjustment request for the sub-image in the multi-image from the local monitor console of the MCU, or receives the adjustment request for the sub-image in the multi-image from a terminal.

In an exemplary embodiment, the adjustment request includes: requesting for adjusting a specified sub-image into a set size; and that the synthesis module adjusts the display parameter of the corresponding sub-image according to the adjustment request includes that:
the synthesis module adjusts a display size of the specified sub-image into the set size according to the adjustment request.

In an exemplary embodiment, the adjustment request includes: requesting for moving the specified sub-image to a set position; and that the synthesis module adjusts the display parameter of the corresponding sub-image according to the adjustment request includes that:
the synthesis module adjusts a display position of the specified sub-image into the set position according to the adjustment request.

In an exemplary embodiment, the synthesis module is further configured to, after adjusting the display position of the specified sub-image into the set position according to the adjustment request, if part of a region of the specified sub-image is located outside a display region of the multi-image, crop or scale down the specified sub-image according to a size of a region, occupied by the specified sub-image, in the display region of the multi-image.

In an exemplary embodiment, the synthesis module is further configured to, after adjusting the display position of the specified sub-image into the set position according to the adjustment request, if a no-content region appears in the display region of the multi-image after adjustment, correspondingly enlarge display sizes of other sub-images or fill the no-content region with a predetermined pattern; and if a sub-image overlapping region appears in the display region of the multi-image after adjustment, correspondingly reduce the display sizes of the other sub-images or display a content in the overlapping region with a predetermined manner.

A computer-readable storage medium stores computer-executable instructions, and the computer-executable instructions are used to execute the abovementioned method.

The schemes of the embodiments of the present invention may improve controllability of a video conference. A requirement of the video conference on independent adjustment of a size and position of a certain interested sub-image may be met under the condition of not making any change to hardware architectures of the MCU and the terminal, and the schemes are particularly practical under the condition of a relatively large number of images.

After the drawings and the detailed descriptions are read and understood, the other aspects may be understood.

### Brief Description of Drawings

FIG. 1 is a flowchart of a multi-image adjusting method according to embodiment 1 of the present invention.
FIG. 2 is a schematic diagram of a multi-image adjustment device according to embodiment 2 of the present invention.
FIG. 3 is a block diagram of a video conference system using an embodiment of the present invention.
FIG. 4(a) to (d) are common sub-image layout manners for a multi-image video conference.
FIG. 5(a) to (c) are schematic diagrams of layouts after a size of a sub-image is changed in a multi-image video conference.
FIG. 6(a) to (c) are schematic diagrams of layouts after a position of a sub-image is changed in a multi-image video conference.
Fig. 7 is a flowchart of selecting and adjusting a sub-image by virtue of a button remote controller.
FIG. 8 is a structure diagram of an MCU according to embodiment 3 of the present invention.

### Detailed Description

It is important to note that embodiments of the present invention and characteristics in the embodiments may be combined without conflicts. In addition, although logic sequences are shown in the flowcharts, the shown or described steps may be executed in sequences different from those described here under some conditions.

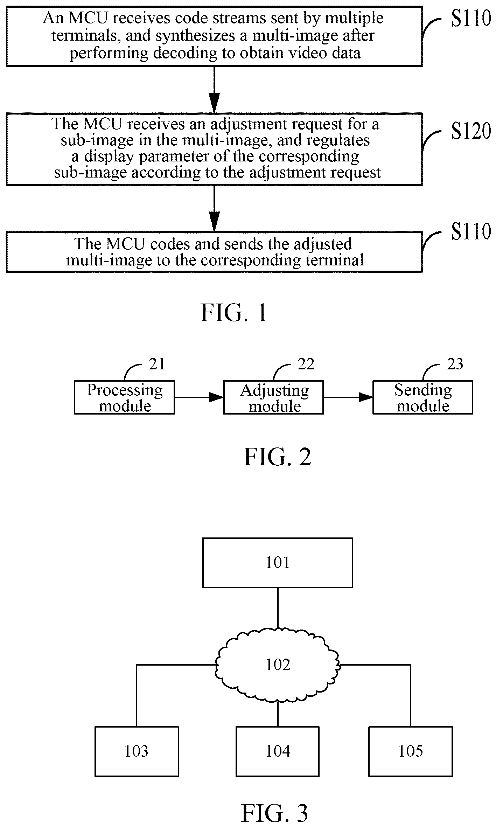

Embodiment 1: a multi-image adjusting method, as shown in FIG. 1, includes Steps S110∼S130.

In step S110, an MCU receives code streams sent by multiple terminals, and synthesizes a multi-image after performing decoding to obtain video data.

In step S120, the MCU receives an adjustment request for a sub-image in the multi-image, and adjusts a display parameter of the corresponding sub-image according to the adjustment request.

In step S130, the MCU codes and sends the adjusted multi-image to the corresponding terminal.

By the method of the present embodiment, personalized adjustment may be performed on displaying of one or more sub-images in the multi-image, and moreover, a hardware architecture is not adjusted.

In an implementation mode, that the MCU receives the adjustment request for the sub-image in the multi-image includes that:
the MCU receives the adjustment request for the sub-image in the multi-image from a local monitor console of the MCU or a terminal. The terminal may include one or more of the following types: a desktop terminal (such as a notebook computer), a mobile terminal (such as a tablet computer or a large-screen mobile phone), a video conference terminal supporting a touch operation, a conventional video conference terminal equipped with a remote controller and the like.

The corresponding terminal in S103 may be any terminal sending the code streams, may also be a terminal specified in the adjustment request, and may further be the terminal sending the adjustment request or a default terminal.

In an implementation mode, the adjustment request includes: requesting for adjusting a specified sub-image into a set size.

That the display parameter of the corresponding sub-image is adjusted according to the adjustment request includes that a display size of the specified sub-image is adjusted into the set size according to the adjustment request.

In the implementation mode, the corresponding sub-image may be scaled up or scaled down according to a requirement.

In an implementation mode, the adjustment request includes: requesting for moving the specified sub-image to a set position.

That the display parameter of the corresponding sub-image is adjusted according to the adjustment request includes that a display position of the specified sub-image is adjusted into the set position according to the adjustment request.

In the implementation mode, the corresponding sub-image may be displayed at a specific position according to a requirement.

In an implementation mode, after the display position of the specified sub-image is adjusted into the set position according to the adjustment request, the method further includes that:
when part of a region of the specified sub-image is located outside a display region of the multi-image, the specified sub-image is cropped or scaled down according to a size of a region, occupied by the specified sub-image, in the display region of the multi-image.

During size adjustment, scaling up the sub-image is to extend in the display region of the multi-image, therefore, the condition that part of a region of the sub-image is located outside the display region of the multi-image after adjustment may usually not occur. If it occurs, processing may be performed with reference to the above. The region, occupied by the specified sub-image, in the display region of the multi-image is a region, where the specified sub-image is located, in the display region of the multi-image.

In the implementation mode, a condition that the sub-image exceeds a display range, which may occur after the position of the sub-image is adjusted, may be better adapted.

In an implementation mode, after the display parameter of the corresponding sub-image is adjusted according to the adjustment request, the method further includes that:
when a no-content region appears in the display region of the multi-image after adjustment (that is, there is a gap between two sub-images), display sizes of other sub-images (i.e. sub-images except the adjusted sub-image in the multi-image) are correspondingly enlarged or the no-content region is filled with a predetermined pattern, the predetermined pattern also including a pure color here; and
when a sub-image overlapping region appears in the display region of the multi-image after adjustment (that is, the sub-images are partially overlapped), the display sizes of the other sub-images are correspondingly reduced or a content in the overlapping region is displayed with a predetermined manner.

Here, the predetermined manner includes transparent superposition or covering (for example, a content of a certain sub-image in the overlapping region is displayed in a top layer in the overlapping region to cover contents of other sub-images in the overlapping region, and the sub-image displayed in the top layer may be, but not limited to, the specified sub-image).

In the implementation mode, a condition that the sub-images are superposed or a blank region appears, which may occur after the display parameter of the sub-image is adjusted, may be better adapted.

Embodiment 2: a multi-image adjustment device, arranged in an MCU, and as shown in FIG. 2, includes a processing module 21, an adjusting module 22 and a sending module 23.

The processing module 21 is configured to receive code streams sent by multiple terminals, and synthesize a multi-image after performing decoding to obtain video data.

The adjusting module 22 is configured to receive an adjustment request for a sub-image in the multi-image, and adjust a display parameter of the corresponding sub-image according to the adjustment request.

The sending module 23 is configured to code and send the adjusted multi-image to the corresponding terminal.

In an implementation mode, that the adjusting module receives the adjustment request for the sub-image in the multi-image includes that:
the adjusting module receives the adjustment request for the sub-image in the multi-image from a local monitor console of the MCU or a terminal.

In an implementation mode, the adjustment request includes: requesting for adjusting a specified sub-image into a set size.

That the adjusting module adjusts the display parameter of the corresponding sub-image according to the adjustment request includes that the adjusting module adjusts a display size of the specified sub-image into the set size according to the adjustment request.

In an implementation mode, the adjustment request includes: requesting for moving the specified sub-image to a set position.

That the adjusting module adjusts the display parameter of the corresponding sub-image according to the adjustment request includes that the adjusting module adjusts a display position of the specified sub-image into the set position according to the adjustment request.

In an implementation mode, the adjusting module is further configured to, after adjusting the display position of the specified sub-image into the set position according to the adjustment request, if part of a region of the specified sub-image is located outside a display region of the multi-image, crop or scale down the specified sub-image according to a size of a region, occupied by the specified sub-image, in the display region of the multi-image.

In an implementation mode, the adjusting module is further configured to, after adjusting the display parameter of the corresponding sub-image according to the adjustment request, if a no-content region appears in the display region of the multi-image after adjustment, correspondingly enlarge display sizes of other sub-images or fill the no-content region with a predetermined pattern; and if a sub-image overlapping region appears in the display region of the multi-image after adjustment, correspondingly reduce the display sizes of other sub-images or display a content in the overlapping region with a predetermined manner.

A process of adjusting in a local monitor console of an MCU will be introduced below with an example.

On the local monitor console of the MCU, for a sub-image of which a size is to be changed (i.e. a specified or selected sub-image), a user sets the size of the sub-image by dragging an image edge or corner (equivalent to generation of an adjustment request), and then the MCU changes the display size of the sub-image according to a set size. After the display size of the selected sub-image is changed, re-layout of other sub-images may be involved. If the size of the selected sub-image is enlarged, part of a region of an adjacent sub-image may be occupied, and the occupied region forms an overlapping region. The overlapping region may be processed with a covering or transparent superposition manner, and the other sub-images except the sub-image of which the size is enlarged may also be automatically scaled down to avoid formation of overlapping regions. If the size of the selected sub-image is reduced, a gap may be formed between the scaled-down sub-image and the adjacent sub-image. The gap may be filled with a pure color or a selected pattern, and sizes of the other sub-images except the sub-image of which the size is reduced are kept unchanged or automatically enlarged to fill an image. Size changes mentioned in the abovementioned scheme include, but are not limited to, an equal aspect ratio scaling manner. If overlapping/gap appears after the sizes of the other sub-images are enlarged or reduced, processing may be performed with reference to the above.

On the local monitor console of the MCU, for a sub-image of which a position is to be moved (i.e. a specified or selected sub-image), the user sets the position of the sub-image by dragging the (equivalent to generation of an adjustment request), and then the MCU changes the display position of the sub-image according to a set position. After the display position of the selected sub-image is changed, re-layout of the other sub-images may be involved. If the selected sub-image is moved towards an inner side (i.e. moved towards a central position) of the whole image (i.e. a display region of the multi-image), part of a region of an adjacent sub-image may be occupied, the occupied region forms an overlapping region. The overlapping region may be processed with the covering or transparent superposition manner, the other sub-images except the sub-image of which the position is moved may also be automatically scaled down to avoid formation of overlapping regions. Gap positions after the sub-image of which the position is moved is moved out may be filled with a pure color or a predetermined pattern. If the selected sub-image is moved towards an outer side (i.e. moved towards an edge position) of the whole image, part of a region of the selected sub-image may be located outside the whole image after movement. A part, still left in the whole image, of the selected sub-image may be displayed only, or the selected sub-image may be scaled down to be completely located in the whole image. There is a gap formed between the moved sub-image and the adjacent sub-image, the gap may be filled with a pure color or a predetermined pattern. Sizes of the other sub-images except the sub-image of which the position is moved are kept unchanged or automatically enlarged to fill the image. Size changes mentioned in the abovementioned scheme include, but are not limited to, the equal aspect ratio scaling manner. If overlapping/gap appears after the sizes of the other sub-images are enlarged or reduced, processing may be performed with reference to the above.

A process of adjusting through a terminal will be introduced below with an example.

For a terminal supporting a screen selection and dragging operation, a user may select a sub-image of which a size is to be adjusted (i.e. a specified or selected sub-image) and set the size of the sub-image by dragging an image edge or corner, then the terminal reports a set size to an MCU, and a subsequent implementation method is the same as a process of adjusting in a local monitor console of the MCU.

For a terminal supporting the screen selection and dragging operation, the user may select a sub-image of which a position is to be moved (i.e. a specified or selected sub-image) and set the position of the sub-image by dragging the image, then the terminal reports a set position to the MCU, and a subsequent implementation method is the same as the process of adjusting in the local monitor console of the MCU.

A process of adjusting through a remote controller will be introduced below with an example.

For a video conference terminal only supporting a remote controller, a user selects a sub-image of which a size is required to be adjusted (i.e. a specified or selected sub-image) at first on an interface on which a multi-image appears, causes the sub-image to enter a size adjustment state by virtue of a combination of some buttons, for example, in a manner of using an "OK" button and a "direction" button, and then may implement finite scaling up and scaling down by operating some buttons (changes in schemes of adjustment in a local monitor console of an MCU or through a terminal may include a manner of scaling without limitation). Then the terminal reports a set size to the MCU, and a subsequent implementation method is the same as a process of adjusting in the local monitor console of the MCU.

For the video conference terminal only supporting the remote controller, the user selects a sub-image of which a position is required to be moved (i.e. a specified or selected sub-image) at first on the interface on which the multi-image appears, causes the sub-image to enter a position changing state by virtue of a combination of some buttons, for example, in a manner of using the "OK" button and the "direction" button, then may implement movement of the selected sub-image by operating the "direction" button, and confirms after moving to a set position, then the terminal reports the set position to the MCU, and a subsequent implementation method is the same as the process of adjusting in the local monitor console of the MCU.

The schemes of the embodiments of the present invention will be described below in detail with reference to the drawings.

FIG. 3 is a block diagram of a video conference system using a multi-image adjusting method of the embodiment of the present invention. A function of each component will be simply introduced below.

An MCU 101 is a core for implementing a multi-image video conference system, and it is configured to receive compressed video streams of terminals 103∼105, perform a corresponding transcoding and scaling operation according to a requirement of a conference after decoding, then generate a multi-image according to a layout requirement and a corresponding parameter, and perform coding to send to the terminals 103∼105. In case of operation in a local monitor console of the MCU when sizes and layout of sub-images are adjusted, it may also serve as a direct input end for set sizes and positions.

The terminals 103∼105 are connected with the MCU 101 through a network 102, and the terminals 103∼105 send single-image video data to the MCU 101 respectively, and receive multi-image video data sent by the MCU 101 at the same time. The video data mentioned here are compressed code streams processed by a certain coding algorithm, and when the sizes and layout of the sub-images are adjusted on the terminals 103∼105, the size and position set for a specified sub-image may be uploaded to the MCU 101 through the network 102.

A video conference terminal 103 is equipped with a console and supports a mouse operation, or is equipped with a touch screen and supports a touch operation, or is equipped with a button remote controller. Operations of selection, dragging scaling, clicking scaling, dragging moving and the like are implemented on a sub-image of which a size or position needs to be adjusted through mouse or touch operation. Operations of selection, clicking scaling, clicking moving and the like are implemented on the sub-image of which the size or position needs to be adjusted through a combination of buttons. The video conference terminal 103 may upload information about the changing of a size and position and the like set for a specified sub-image to the MCU 101.

A desktop terminal 104 supports a screen dragging operation implemented through a mouse or a touch screen. A user may select a sub-image of which a size or position needs to be adjusted, and then implements operations of dragging scaling, clicking scaling, dragging moving and the like. The desktop terminal 104 may upload information about the changing of a size and position and the like set for a specified sub-image to the MCU 101.

A mobile terminal 105 supports a screen dragging operation implemented through a touch screen. A user may select a sub-image of which a size or position needs to be adjusted, and then implements operations of dragging scaling, clicking scaling, dragging moving and the like. The mobile terminal 105 may upload information about the changing of a size and position and the like set for a specified sub-image to the MCU 101.

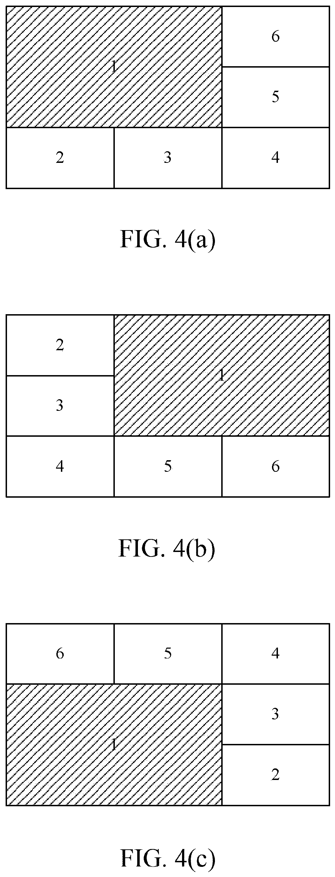

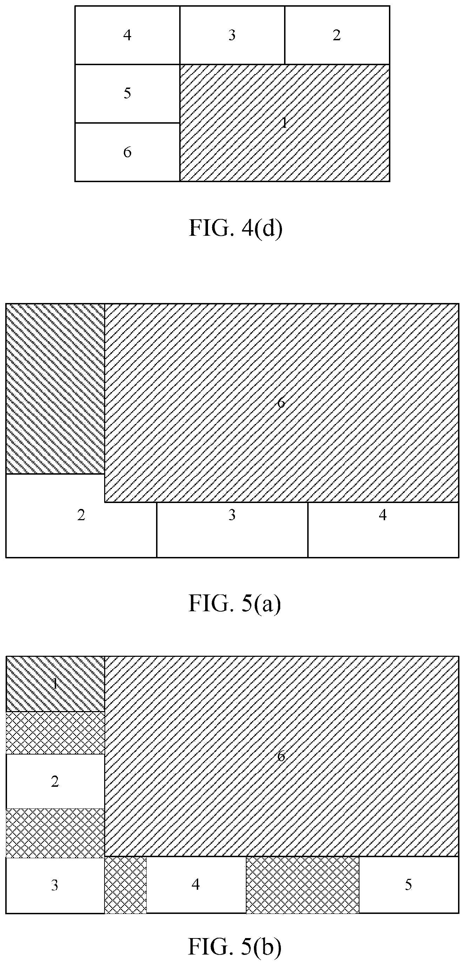

FIG. 4(a)∼(d) are common sub-image layout manners for a multi-image video conference. A 6-image with aspect ratio of 16:9 is taken as an example.

### Schematic diagram 4(a)

A left upper corner is a large sub-image 1 occupying 4/9 of an area, sub-images 2-6 are small sub-images occupying 1/9 of the area respectively, and all the sub-images are seamlessly spliced together to form a 6-image.

### Schematic diagram 4(b)

A right upper corner is a large sub-image 1 occupying 4/9 of an area, sub-images 2∼6 are small sub-images occupying 1/9 of the area respectively, and all the sub-images are seamlessly spliced together to form a 6-image.

### Schematic diagram 4(c)

A left lower corner is a large sub-image 1 occupying 4/9 of an area, sub-images 2∼6 are small sub-images occupying 1/9 of the area respectively, and all the sub-images are seamlessly spliced together to form a 6-image.

### Schematic diagram 4(d)

A right lower corner is a large sub-image 1 occupying 4/9 of an area, sub-images 2∼6 are small sub-images occupying 1/9 of the area respectively, and all the sub-images are seamlessly spliced together to form a 6-image.

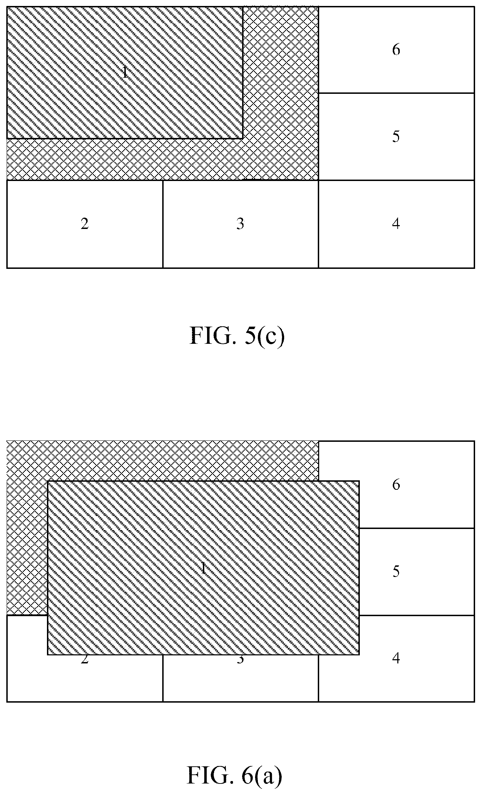

FIG. 5 is a schematic diagram of a layout after a size of a sub-image is changed in a multi-image video conference. Descriptions will be made with adjustment for the layout in schematic diagram 4(a) as an example.

### Schematic diagram 5(a)

A sub-image 6 in FIG. 4(a) is selected at first, its size is enlarged by a manner of dragging, clicking or the like, including, but not limited to, a size enlargement manner with keeping an aspect ratio unchanged, the size may maximally be adjusted to spread the whole screen. FIG. 5(a) shows an effect of enlarging the size of the sub-image 6 towards a left lower corner at the equal aspect ratio. After being enlarged, the sub-image 6 may occupy the positions of adjacent sub-images, and as shown in FIG. 5(a), occupies the whole region of a sub-image 5 and occupies part of the regions of sub-images 1∼4, and if sizes of the sub-images 1∼5 are kept unchanged, processing for overlapping regions may use a covering or transparent superposition manner; and if the sizes of the sub-images 1∼5 are also changed along with enlargement of the sub-image 6, an effect refers to schematic diagram 5(b).

### Schematic diagram 5(b)

The size of the sub-image 6 is enlarged to occupy the regions of the adjacent sub-images. The sizes of the sub-images 1∼5 are also changed by, but not limited to, an equal aspect ratio changing manner. FIG. 5(b) shows an effect of reducing the sizes of the sub-images 1∼5 at the equal aspect ratio. After the sub-images 1∼5 are scaled down at the equal aspect ratio, there may exist some gaps in an image (regions of grid line parts in FIG. 5(b)), and these gaps may use a manner, including, but not limited to, a pure color, for example, not limited to, filling with pure black.

### Schematic diagram 5(c)

The sub-image 1 in FIG. 4(a) is selected, its size is reduced by the manner of dragging, clicking or the like, including, but not limited to, a size reduction manner with keeping the aspect ratio unchanged. FIG. 5(c) shows an effect of reducing the size of the sub-image 1 towards a left upper corner at the equal aspect ratio. After the sub-image 1 is reduced, the sizes of the sub-images 2∼6 are kept unchanged, or are subjected to, including, but not limited to, equal aspect ratio enlargement. Gap regions (regions of grid line parts in FIG. 5(c)) formed after the abovementioned change may use a manner, including, but not limited to, a pure color. For example, after the sub-image 1 is reduced, the sizes of the sub-images 2∼6 are kept unchanged, and gaps are filled with pure black.

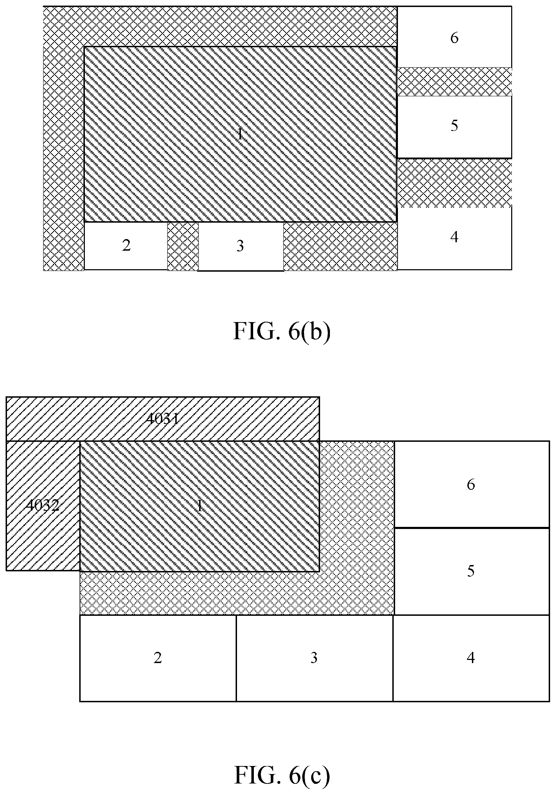

Fig. 6 is a schematic diagram of a layout after a position of a sub-image is changed in a multi-image video conference. Descriptions will be made with adjustment for the layout in schematic diagram 4(a) as an example.

### Schematic diagram 6(a)

A sub-image 1 in FIG. 4(a) is selected at first, its position is moved by a manner of dragging, clicking or the like. FIG. 6(a) shows an effect of moving the position of the sub-image 1 to an inner side, i.e. a right lower corner. After being moved, the sub-image 1 may occupy positions of adjacent sub-images, and as shown in FIG. 6(a), it occupies part of regions of sub-images 2∼6, and gap regions formed in a left upper corner after movement (regions of grid line parts in FIG. 6(a)) may be filled with pure black. If sizes of the sub-images 2∼6 are kept unchanged, processing for overlapping regions may use a covering or transparent superposition manner. If the sizes of the sub-images 2∼6 are also changed along with movement of the sub-image 1, an effect refers to schematic diagram 6(b).

### Schematic diagram 6(b)

The sub-image 1 in the layout in FIG. 4(a) is selected, and its position is changed by dragging, for example, inward movement, to occupy part of regions of the adjacent sub-images 2∼6. The sizes of the sub-images 2∼6 are also changed by, but not limited to, an equal aspect ratio changing manner. FIG. 6(b) shows an effect of reducing the sizes of the sub-images 2∼6 at an equal aspect ratio. After the sub-images 2∼6 are scaled down at the equal aspect ratio, there may exist some gaps in an image (regions of grid line parts in FIG. 6(b)), and these gaps may use a manner, including, but not limited to, a pure color, for example, not limited to, filling with pure black.

### Schematic diagram 6(c)

The sub-image 1 in the layout in FIG. 4(a) is selected, and its position is changed by the dragging manner, for example, outward movement. FIG. 6(c) shows an effect of moving the sub-image 1 towards the left upper corner, a part still left in the whole image after movement may be purely captured (that is, only the part, still left in the whole image, of the selected sub-image is displayed) or the sub-image 1 is scaled down, and scaling down uses, but not limited to, the equal aspect ratio changing manner. FIG. 6(c) shows a pure capturing effect, herein 4031 and 4032 are parts moved out of the image, i.e. purely cropped parts. After the sub-image 1 is moved outwards, the sizes of the sub-images 2∼6 are kept unchanged, or are subjected to, including, but not limited to, equal aspect ratio enlargement. Gap regions formed after the abovementioned change may use a manner of filling, including, but not limited to, a pure color. In FIG. 6(c), after the sub-image 1 is moved outwards, the sizes of the sub-images 2∼6 are kept unchanged, and gaps (regions of grid line parts in FIG. 6(c)) may be filled with pure black.

In a button remote controller configured for a conventional video conference terminal:

A "direction" button has upper, lower, left and right directions, and a more advanced remote controller is also added with four directions, i.e. left upper, right upper, left lower and right lower. When being a video conference terminal, a terminal in the embodiment of the present invention includes, but not limited to, a remote controller with the upper, lower, left and right directions, including, but not limited to, a button remote controller. The "direction" button in the embodiment of the present invention has a function of selecting and moving a sub-image and a function of simulating dragging of an image frame, and also has a function of selecting a previous/subordinate menu during a menu operation.

An "OK" button is used to confirm a selected sub-image, the "OK" button may be quickly pressed for a sub-image of which a size is about to be changed to implement continuous scaling-up of the sub-image. After the sub-image is continuously scaled up and moved, the "OK" button is repressed to confirm a selected size and position after a time interval.

A "menu" button: the "menu" button is pressed to select a sub-image adjustment menu, and a subordinate menu for adjusting a size or position of a sub-image is further selected.

A "back" button: after a size or position of a sub-image is adjusted, a user may press the "back" button to back to a previous image size or position, and continuously presses the "back" button to back to an initial multi-image layout.

During a practical application, functions of the buttons and combination thereof of the remote controller in multi-image adjustment are not limited to the above descriptions, and may be independently set.

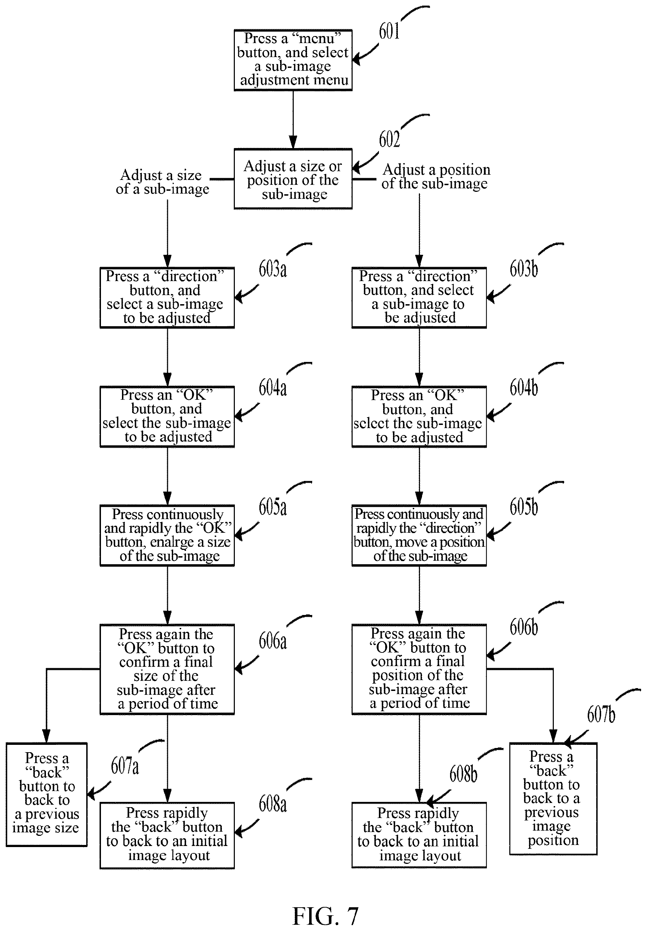

FIG. 7 is a flowchart of selecting and adjusting a sub-image by virtue of a button remote controller.

### Step 601:

A "menu" button is pressed, then a Graphical User Interface (GUI) menu may appear on a multi-image of a television, a sub-image adjustment menu is selected, and then Step 602 is executed.

### Step 602:

A user selects a sub-menu for adjusting a size or position of a sub-image according to a requirement, if the sub-menu for adjusting the size of the sub-image is selected, Step 603a is executed, and if the sub-menu for adjusting the position of the sub-image is selected, Step 603b is executed.

### Step 603a:

At this moment, a state of selecting the size of the sub-image has been entered, there is a sub-image selected by default in the multi-image. The embodiment of the present invention includes, but is not limited to, a selection manner mentioned in Steps 601∼602. The user presses a "direction" button to select a sub-image of which a size is about to be adjusted according to a requirement, and then Step 604a is executed. During selection, a framing or protruding manner may be used to represent the selected sub-image.

### Step 604a:

The user presses an "OK" button at this moment to represent that the selected sub-image is a sub-image of which the size is about to be adjusted, the selected sub-image is represented in the framing or sinking manner, and then Step 605a is executed.

### Step 605a:

The user rapidly and continuously presses the "OK" button, the size of the selected sub-image is enlarged, and may maximally spread the whole image, the size is scaled up by one level by every two continuous button pressing. After scaling up to a required size, Step 606a is executed after pausing for a period of time. Herein a layout of other sub-images refers to schematic diagrams 5(a)∼(b) when the size of the sub-image does not spread the whole image after being enlarged.

### Step 606a:

After scaling up to the required size, the user presses the "OK" button again to confirm that adjustment of the size of the selected sub-image is completed after pausing for a period of time. If the user is intended to scale down the enlarged sub-image, Step 607a is executed; and if the user is intended to directly back to an original multi-image layout, Step 608a is executed.

### Step 607a:

If the user is intended to scale down the enlarged sub-image, a "back" button is pressed to scale down the sub-image by one level to a previous size until backing to the original multi-image layout.

### Step 608a:

If the user is intended to directly back to the original multi-image layout, the "back" button is rapidly and continuously pressed to return to the original multi-image layout.

### Step 603b:

At this moment, a state of selecting the position of the sub-image has been entered, there is a sub-image selected by default in the multi-image. The embodiment of the present invention includes, but is not limited to, the selection manner mentioned in Steps 601∼602. The user presses the "direction" button to select a sub-image of which a position is about to be adjusted according to a requirement, and then Step 604b is executed. Herein the framing or protruding manner may be used to represent the selected sub-image during selection.

### Step 604b:

The user presses the "OK" button at this moment to represent that the selected sub-image is the sub-image of which the size is about to be adjusted, the selected sub-image is represented in the framing or sinking manner, and then Step 605b is executed.

### Step 605b:

The user rapidly and continuously presses the "OK" button, the position of the selected sub-image may be changed. The position is moved by one grid by every two continuous button pressing, and after the movement to a required position, Step 606b is executed after pausing for a period of time. Herein a layout of other sub-images refers to schematic diagrams 6(a)∼(c) when the sub-image is moved.

### Step 606b:

After the movement to the required position, the user presses the "OK" button again to confirm that adjustment of the position of the selected sub-image is completed after pausing for a period of time. If the user is intended to back to a previous position of the sub-image, Step 607b is executed; and if the user is intended to directly back to the original multi-image layout, Step 608b is executed.

### Step 607b:

If the user is intended to back to the previous position of the sub-image, the "back" button is pressed to make the sub-image back by one grid until backing to the original multi-image layout.

### Step 608b:

If the user is intended to directly back to the original multi-image layout, the "back" button is rapidly and continuously pressed to return to the original multi-image layout.

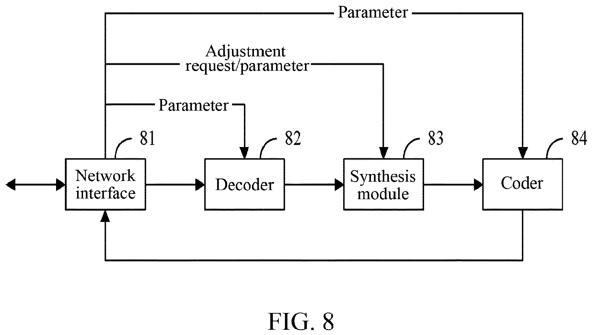

Embodiment 3: an MCU, as shown in FIG. 8, includes a network interface 81, a decoder 82, a synthesis module 83, and a coder 84.

The network interface 81 is configured to receive code streams sent by multiple terminals.

The decoder 82 is configured to decode the code streams to obtain video data.

The synthesis module 83 is configured to synthesize the video data into a multi-image.

The coder 84 is configured to code the synthesized multi-image to send it through the network interface.

The network interface is further configured to receive an adjustment request for a sub-image in the multi-image.

The synthesis module is further configured to adjust a display parameter of a corresponding sub-image according to the adjustment request.

The coder is further configured to code the adjusted multi-image to send to a corresponding terminal through the network interface.

The network interface is further configured to send a parameter to the decoder, the coder and the synthesis module.

In an implementation mode, the MCU further includes a local monitor console of the MCU.

The local monitor console of the MCU includes a display screen, configured to display the multi-image; and a mouse, configured to input the adjustment request.

That the network interface receives the adjustment request for the sub-image in the multi-image includes that: the network interface receives the adjustment request for the sub-image in the multi-image from the local monitor console of the MCU, or receives the adjustment request for the sub-image in the multi-image from a terminal.

In an implementation mode, the adjustment request includes: requesting for adjusting a specified sub-image into a set size.

That the synthesis module adjusts the display parameter of the corresponding sub-image according to the adjustment request includes that: the synthesis module adjusts a display size of the specified sub-image into the set size according to the adjustment request.

In an implementation mode, the adjustment request includes: requesting for moving the specified sub-image to a set position.

That the synthesis module adjusts the display parameter of the corresponding sub-image according to the adjustment request includes that: the synthesis module adjusts a display position of the specified sub-image into the set position according to the adjustment request.

In an implementation mode, the synthesis module is further configured to, after adjusting the display position of the specified sub-image into the set position according to the adjustment request, if part of a region of the specified sub-image is located outside a display region of the multi-image, crop or scale down the specified sub-image according to a size of a region, occupied by the specified sub-image, in the display region of the multi-image.

In an implementation mode, the synthesis module is further configured to, after adjusting the display position of the specified sub-image into the set position according to the adjustment request, if a no-content region appears in the display region of the multi-image after adjustment, correspondingly enlarge display sizes of other sub-images or fill the no-content region with a predetermined pattern; and if a sub-image overlapping region appears in the display region of the multi-image after adjustment, correspondingly reduce the display sizes of other sub-images or display a content in the overlapping region with a predetermined manner.

Embodiment 4: a computer-readable storage medium stores a computer-executable instruction, and the computer-executable instruction is used for executing the method of the abovementioned embodiment 1.

Those skilled in the art should know that all or part of the steps of the abovementioned method may be implemented by instructing related hardware through a program, and the program may be stored in a computer or embedded system-readable/writable storage medium, such as a read-only memory, a random access memory, a magnetic disk or an optical disk. Optionally, all or part of the steps of the abovementioned embodiment may also be implemented by virtue of one or more integrated circuits. Correspondingly, the modules/units in the abovementioned embodiment may be implemented by a form of hardware, and may also be implemented by a form of software function module. The embodiment of the present invention is not limited to a hardware and software combination in any specific form.

### Industrial Applicability

The schemes of the embodiments of the present invention may improve controllability of a video conference. A requirement of the video conference on independent adjustment of a size and position of a certain interested sub-image may be met under the condition of not making any change to hardware architectures of the MCU and the terminal, and the schemes are particularly practical under the condition of a relatively large number of images.

## Claims

1. A multi-image adjusting method, comprising:
receiving, by a Multipoint Controller Unit, MCU, code streams sent by a plurality of terminals, and synthesizing a multi-image after performing decoding to obtain video data;
receiving, by the MCU, an adjustment request for a sub-image in the multi-image, and adjusting a display parameter of a corresponding sub-image according to the adjustment request; and
coding and sending, by the MCU, the adjusted multi-image to a corresponding terminal.

2. The method according to claim 1, wherein receiving, by the MCU, the adjustment request for the sub-image in the multi-image comprises:
receiving, by the MCU, the adjustment request for the sub-image in the multi-image from a local monitor console of the MCU or a terminal.

3. The method according to claim 1, wherein
the adjustment request comprises: requesting for adjusting a specified sub-image into a set size; and
adjusting the display parameter of the corresponding sub-image according to the adjustment request comprises:
adjusting a display size of the specified sub-image into the set size according to the adjustment request.

4. The method according to claim 1, wherein
the adjustment request comprises: requesting for moving the specified sub-image to a set position; and
adjusting the display parameter of the corresponding sub-image according to the adjustment request comprises:
adjusting a display position of the specified sub-image into the set position according to the adjustment request.

5. The method according to claim 4, wherein, after adjusting the display position of the specified sub-image into the set position according to the adjustment request, the method further comprises:
when part of a region of the specified sub-image is located outside a display region of the multi-image, cropping or scaling down the specified sub-image according to a size of a region, occupied by the specified sub-image, in the display region of the multi-image.

6. The method according to any one of claims 1-5, wherein, after adjusting the display parameter of the corresponding sub-image according to the adjustment request, the method further comprises:
when a no-content region appears in the display region of the multi-image after adjustment, correspondingly enlarging display sizes of other sub-images or filling the no-content region with a predetermined pattern; and
when a sub-image overlapping region appears in the display region of the multi-image after adjustment, correspondingly reducing the display sizes of other sub-images or displaying a content in the overlapping region with a predetermined manner.

7. A multi-image adjustment device, arranged in a Multipoint Controller Unit (MCU) and comprising:
a processing module, configured to receive code streams sent by a plurality of terminals, and synthesize a multi-image after performing decoding to obtain video data;
an adjusting module, configured to receive an adjustment request for a sub-image in the multi-image, and adjust a display parameter of a corresponding sub-image according to the adjustment request; and
a sending module, configured to code and send the adjusted multi-image to a corresponding terminal.

8. The device according to claim 7, wherein that the adjusting module receives the adjustment request for the sub-image in the multi-image comprises that:
the adjusting module receives the adjustment request for the sub-image in the multi-image from a local monitor console of the MCU or a terminal.

9. The device according to claim 7, wherein
the adjustment request comprises: requesting for adjusting a specified sub-image into a set size; and
that the adjusting module adjusts the display parameter of the corresponding sub-image according to the adjustment request comprises that:
the adjusting module adjusts a display size of the specified sub-image into the set size according to the adjustment request.

10. The device according to claim 7, wherein
the adjustment request comprises: requesting for moving the specified sub-image to a set position; and
that the adjusting module adjusts the display parameter of the corresponding sub-image according to the adjustment request comprises that:
the adjusting module adjusts a display position of the specified sub-image into the set position according to the adjustment request.

11. The device according to claim 10, wherein
the adjusting module is further configured to, after adjusting the display position of the specified sub-image into the set position according to the adjustment request, when part of a region of the specified sub-image is located outside a display region of the multi-image, crop or scale down the specified sub-image according to a size of a region, occupied by the specified sub-image, in the display region of the multi-image.

12. The device according to any one of claims 7-11, wherein
the adjusting module is further configured to, after adjusting the display parameter of the corresponding sub-image according to the adjustment request, when a no-content region appears in the display region of the multi-image after adjustment, correspondingly enlarge display sizes of other sub-images or fill the no-content region with a predetermined pattern; and when a sub-image overlapping region appears in the display region of the multi-image after adjustment, correspondingly reduce the display sizes of other sub-images or display a content in the overlapping region with a predetermined manner.

13. A Multipoint Controller Unit, MCU, comprising:
a network interface, configured to receive code streams sent by a plurality of terminals;
a decoder, configured to decode the code streams to obtain video data;
a synthesis module, configured to synthesize the video data into a multi-image; and
a coder, configured to code the synthesized multi-image to send through the network interface,
wherein
the network interface is further configured to receive an adjustment request for a sub-image in the multi-image;
the synthesis module is further configured to adjust a display parameter of a corresponding sub-image according to the adjustment request; and
the coder is further configured to code the adjusted multi-image to send to a corresponding terminal through the network interface.

14. The MCU according to claim 13, further comprising:
a local monitor console of the MCU, wherein the local monitor console of the MCU comprises:
a display screen, configured to display the multi-image, and
a mouse, configured to input the adjustment request; and
that the network interface receives the adjustment request for the sub-image in the multi-image comprises that:
the network interface receives the adjustment request for the sub-image in the multi-image from the local monitor console of the MCU, or receives the adjustment request for the sub-image in the multi-image from a terminal.

15. The MCU according to claim 13, wherein
the adjustment request comprises: requesting for adjusting a specified sub-image into a set size; and
that the synthesis module adjusts the display parameter of the corresponding sub-image according to the adjustment request comprises that:
the synthesis module adjusts a display size of the specified sub-image into the set size according to the adjustment request.

16. The MCU according to claim 13, wherein
the adjustment request comprises: requesting for moving the specified sub-image to a set position; and
that the synthesis module adjusts the display parameter of the corresponding sub-image according to the adjustment request comprises that:
the synthesis module adjusts a display position of the specified sub-image into the set position according to the adjustment request.

17. The MCU according to claim 16, wherein
the synthesis module is further configured to, after adjusting the display position of the specified sub-image into the set position according to the adjustment request, when part of a region of the specified sub-image is located outside a display region of the multi-image, crop or scale down the specified sub-image according to a size of a region, occupied by the specified sub-image, in the display region of the multi-image.

18. The MCU according to any one of claims 13-17, wherein the synthesis module is further configured to, after adjusting the display position of the specified sub-image into the set position according to the adjustment request, when a no-content region appears in the display region of the multi-image after adjustment, correspondingly enlarge display sizes of other sub-images or fill the no-content region with a predetermined pattern; and when a sub-image overlapping region appears in the display region of the multi-image after adjustment, correspondingly reduce the display sizes of other sub-images or display a content in the overlapping region with a predetermined manner.
